# EUROPEAN PATENT SPECIFICATION

(11) **EP 1 593 261 B1**
(45) Date of publication and mention of the grant of the patent: **04.01.2012**
(21) Application number: 04702772.7
(22) Date of filing: 16.01.2004
(51) Int. Cl.: H04N 5/76, H04N 5/765

(54) **A VIDEO RECORDING APPARATUS AND METHOD OF OPERATION THEREFOR**
VIDEOAUFZEICHNUNGSVORRICHTUNG UND VERFAHREN ZU IHREM BETRIEB
APPAREIL D'ENREGISTREMENT VIDEO ET PROCEDE DE FONCTIONNEMENT

(30) Priority: 05.02.2003 EP 03100235
(43) Date of publication of application: 09.11.2005
(73) Proprietor: Koninklijke Philips Electronics N.V., 5621 BA Eindhoven (NL)
(72) Inventor: BARVINKO, Pavlo, NL-5656 AA Eindhoven (NL); KONIECZNY, Pawel, A., NL-5656 AA Eindhoven (NL)
(74) Representative: Roche, Denis
(86) International application number: PCT/IB2004/050029
(87) International publication number: WO 2004/071082

(56) References cited:
- WO-A-00/79792
- WO-A-97/10678
- US-B1- 6 490 009

## Description

The invention relates to a video recording apparatus and method of operation therefor and in particular to a video recording apparatus comprising: a first input for receiving at least a first input signal of a first type; a second input for receiving at least a second input signal of a second type different than the first type; means for operating in a first operating mode when no input signal is detected on the second input; and means for operating in a second operating mode having different functionality than the first operating mode when an input signal is detected on the second input.

In recent years, content such as films, TV programmes, music etc have increasingly been distributed in different ways and by different means. Especially, the increased use of digital signals to represent content has resulted in an increased number of possible distribution channels, storage means and signal processing and manipulation functions becoming available to the consumer.

In particular, the field of audiovisual signal generation, storage, processing, manipulation and distribution has increasingly used digital representations. In the consumer area, video cameras for private use have in the last decade emerged which stores the captured video (and audio) signal in a digital format. Different digital standards have been defined but in particular the Digital Video (DV) standard has become widespread in the consumer electronics field. For example, small, portable and cheap video cameras that store the captured video in a DV digital format on small video tapes are widely available.

Typically, these cameras comprise both an analogue and digital video output, where the digital output typically outputs a DV standard video signal. Some cameras further comprise DV inputs for receiving a DV video signal from an external source for storing on the video tape. The digital DV input and output are typically operable to connect to other devices through a standardized interface known as IEEE-1394 (also known as FireWire^{™} or iLink^{™}).

In addition to the increased availability of digital video cameras, the available equipment for storing and recording video signals has become increasingly diverse. Especially, equipment for digital storage of video signals has in the latter years become increasingly widespread. Specifically, recent years have seen the advent of digital hard disk based video recorders, such as Personal Video Recorders (PVRs), and digital removable storage medium recorders, such as Digital Versatile Disc (DVD) based recorders. It is also expected that computer based central entertainment equipment will become increasingly prevalent. It is expected that such equipment will comprise functionality for digitally recording video signals.

Typically the digital video recorder comprises analogue input means for receiving an analogue video signal. The analogue signal is converted to a digital signal before being stored on the storage medium.

In addition, most high-end and mid-range video recorders currently comprise a digital input such as a DV input. This input may receive a digital video signal directly from an external source, such as a DV camera. The digital DV video signal is typically compressed to a digital MPEG2 signal before being stored. Any processing is performed in the digital domain and a very high level of video quality is therefore maintained.

Accordingly most current video recorders comprise both digital and analogue signal inputs. Additionally many digital video recorders comprise internal TV tuners that generate analogue video signals which may be recorded. Typically switching between the different signals and inputs are achieved by the video recorder implementing a selection carousel or channel ring. A user activation will cause the selection of the next signal or input in the selection carousel. Typically, both the digital and analogue signals are included in the selection carousel such that the digital input can be selected through the standard selection ring. However, there are disadvantages associated with this approach as the integration of the different types of inputs tend to result in inconsistencies, screen artifacts when switching, increased delays and increased inconvenience to the user as additional channels are included in the selection carousel.

Another advantage of digital video signals is that processing and manipulation of the video signals is typically more flexible, practical and feasible than for an analogue signal. For example, digital video cameras or recorders frequently comprise video editing functionality that is not feasible for analogue signals in consumer equipment. For example, many forms of video editing may relatively easily be performed by digital signal processing of a digital signal but are extremely complex or impossible for analogue signals. Therefore, digital video recorders tend to be significantly more complex to operate than traditional analogue video recorders. For example, digital video recorders tend to have more complex user interfaces with a number of different functions being only feasible for one or the other type of signal. In addition, the internal management and control functions in the video recorders have become increasingly complex and resource demanding.

Hence, an improved video recorder would be advantageous and in particular a video recorder allowing for increased flexibility, user friendliness, increased performance and/or reduced complexity would be advantageous.

WO 97/10678 discloses a video signal display, comprising means for processing a video signal for display; input means for receiving and selecting between two video signals for coupling to said processing means, wherein a first input receives a component video signal and second input receives a composite video signal; and, control means coupled to said receiving and selecting means, said control means having a predetermined first condition wherein said first input is selected, and a second condition responsive to an external control signal wherein said second input is selected, said external control signal being communicated by said component video signal.

Accordingly, the Invention seeks to mitigate, alleviate or eliminate one or more of the above mentioned disadvantages singly or in any combination.

According to a first aspect of the invention, there is provided a video recording apparatus comprising: a first input for receiving at least a first input signal of a first type; a second input for receiving at least a second input signal of a second type different than the first type; means for operating in a first operating mode when no input signal is detected on the second input; and means for operating in a second operating mode having different functionality than the first operating mode when an input signal is detected on the second input, characterized in that the video recording apparatus further comprises means for selecting, which are configured for enabling a user to select an input entry associated with the first input or the second input, the means for selecting being operable to enable only selection of an input entry associated with the first input and to skip the input entries associated with the second input when in the first operating mode.

The different functionality may for example comprise different user interface related functions, different video signal processing or manipulation functions or different control or management functionality.

This allows for simple and user friendly selection functionality in the first operational mode. Furthermore, the selection means may in the first mode be isolated from the second input signal thus allowing for improved performance as effects associated with switching between different input signal types can be avoided.

The invention allows for operating modes having functionality specifically suited for a given input signal to be automatically selected. This allows for a much simpler operation and thus increased user friendliness. For example, the user interface may be automatically optimized to only reflect the options and functionality available for the given input signal. It may also allow for simpler control and management functionality of the video recorder thus resulting in a lower complexity. Performance may be increased as the functionality may be optimized for the given input signal. Specifically, available resource, such as computational resource may be allocated to optimize performance for the given input signal.

According to a feature of the invention, the first type is an analogue type of input signal and the second type of input signal is a digital type of input signal. Hence, the invention allows for the functionality and operational mode to be automatically optimized for analogue and digital signals respectively. The digital type of input signal is preferably a Digital Video (DV) input signal thereby allowing for use with a wide range of available consumer equipment.

According to a different feature of the invention, the different functionality comprises different video recording functionality. This allows for the video recording functionality to be optimized for the characteristics of the given video signal. For example, the video recording facility may be optimized according to whether a digital input signal is available or not.

According to a different feature of the invention, the first and second operating modes have different video editing functionality. The video recorder may automatically select a video editing functionality suitable for the input signals. Specifically, the video recorder may automatically select an operational mode allowing digital video editing if the presence of a digital video signal is detected at the second input.

According to a different feature of the invention, the second operating mode is a video archiving mode. Thus the invention allows for an automatic selection of an archiving mode when a signal is fed to the second input. This allows for a very simple and user friendly archiving of video signals from an external source.

According to a different feature of the invention, the apparatus has hardware limitations that cause a first functionality limitation on signals of the first type and a second functionality limitation on signals of the second type, and the functionality of the first operating mode meets that of the first functionality limitation and the functionality of the second operating mode meets that of the second functionality limitation.

The hardware limitations of the video recorder may have different impact on different types of signals, and the invention allows for the operating modes to automatically reflect this impact. This allows for increased user friendliness as the user interface may automatically reflect the possible functions for the given input signal. For example, in view of the available hardware resources, some functions, such as video editing, may be feasible for the second type but not for the first type of input signals, and the user interface and operational modes may only include these functions, when a signal is detected on the second input. Hence, the available hardware resources may be individually allocated to different functionality in the first and second operational mode.

According to a different feature of the invention, the hardware limitation is a computational resource limitation. Hence, the invention allows for the functionality to be adapted and optimized in response to the impact of an available computational resource on different types of signal. It furthermore allows for the computational resource to be allocated in accordance with the characteristics and impact of the given type of signal.

According to a different feature of the invention, the second type of input signal comprises additional information not present in the first type of input signal, and the second mode comprises functionality using this additional information. For example, a second type of input signal is preferably a digital signal comprising additional information data in comparison to a first analogue type of signal. The additional information may be used to provide improved performance or additional functionality.

According to a different feature of the invention, the different functionality comprises different input entry selection functionality. The invention allows for the selection to be optimized according to whether an input signal is present on the second data input. This allows for improved performance, reduced complexity, increased flexibility and/or increased user friendliness.

According to a different feature of the invention, the selection means comprises a selection carousel which in the first operation mode includes only input entries associated with the first input. This enables a low complexity, efficient and user friendly way of selection which is easy to implement.

According to a different feature of the invention, the selection means is operable to only enable selection of entries associated with the second input when in the second mode. This allows for a very easy operation of the video recorder as the second input signal may automatically be selected when fed to the second input. This allows for the second input signal to take preference over input signals associated with the first input.

According to a second aspect of the invention, there is provided method of operation for a video recording apparatus having a first input for receiving at least a first input signal of a first type and a second input for receiving at least a second input signal of a second type different than the first type; the method comprising the steps of: operating in a first operating mode when no input signal is detected on the second input; and operating in a second operating mode having different functionality than the first operating mode when an input signal is detected on the second input, characterized in that the method further comprises a step of enabling selection by a user of an input entry associated with the first input or the second input, the step of enabling selection being operable to enable only selection of an input entry associated with the first input (103) and skip the input entries associated with the second input when in the first operating mode.

These and other aspects, features and advantages of the invention will be apparent from and elucidated with reference to the embodiment(s) described hereinafter.

An embodiment of the invention will be described, by way of example only, with reference to the drawing, in which

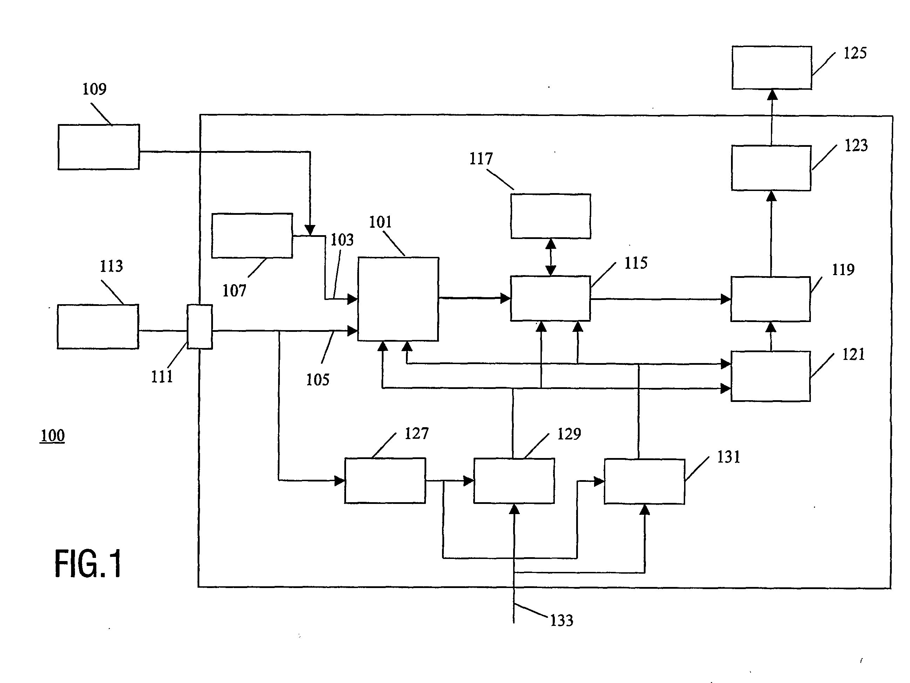

FIG. 1 is an illustration of a video recording apparatus in accordance with an embodiment of the invention.

The following description focuses on an embodiment of the invention applicable to a video recording apparatus for recording analogue and digital input signals but it will be appreciated that the invention is not limited to this application. Furthermore, the following description specifically discus the operation for video signals but it will be appreciated that this may include associated signals such as the accompanying audio signals. Specifically, the video signal may be a composite audiovisual signal comprising both video and audio information.

FIG. 1 is an illustration of a video recording apparatus100 in accordance with an embodiment of the invention.

The video recording apparatus 100 comprises a selection unit 101 having a first input 103 associated with a first type of input signals and second type of input signals associated with a second type of input signal. In the described embodiment, the first input is an analogue input for analogue type input signals and the second input is a digital input for digital type input signals.

The analogue input 103 is connected to an internal analogue tuner 107 which is operable to receive analogue TV signals and feed these to the selection unit 101. The analogue tuner 107 may switch between a plurality of different TV channels and this may be under the control of the selection unit 101. In addition, the first input 103 may receive a signal from an external analogue source 109. The apparatus 100 may comprise a plurality of analogue inputs connected to the selection unit 101 and may for example comprise both SCART, S-video and composite video inputs. The selection unit 101 is operable to select between the different TV channels of the analogue tuner as well as between the analogue inputs. The first input may alternatively be considered to comprise a plurality of sub-inputs with the selection unit 101 being operable to switch between these sub inputs.

The second input 105 is operable to receive a digital video signal. In the example shown, the second input 105 is coupled to a connector 111 that allows an external digital source 113, such as a digital video camera, to be connected to the selection unit 101.

The selection unit 101 is connected to a video processor 115 which is fed the input signal selected by the selection unit 101. The video processor 115 is bi-directionally coupled to a video storage 117 and is operable to store and retrieve video signals from the video storage 117. The video storage 117 may for example be a hard disc or a DVD. When recording, the video recorder stores the selected input signal in the video storage 117. When playing back a recorded video signal, the video processor 115 retrieves a video signal from the video storage 117 and feeds it to a presentation processor 119 to which it is coupled. The video processor 115 is further operable to perform various signal processing and manipulation of the video signals. This processing may in the preferred embodiment involve processing of both an input signal being stored in the video storage 117 and/or a video signal being retrieved from the video storage 117. Specifically, the video processor 115 may retrieve a video signal from the video storage 117; perform processing and manipulation operations on the retrieved video signal and subsequently store the resulting video signal in the video storage 117.

The presentation processor 119 is operable to process the video signal received from the video processor 115 to generate a presentation signal. This processing may for example comprise converting a digitally stored signal to an analogue presentation signal. The presentation processor 119 is furthermore coupled to a user interface controller 121. The user interface controller 121 is in the preferred embodiment operable to generate on-screen displays showing user options and information related to the video signals, the video storage 117 and the operation of the video recording apparatus 101. The presentation processor 119 is in the preferred embodiment operable to combine the video signal and the user interface information such that, for example, the user interface information may be overlaid the video signal image.

The presentation processor 119 is coupled to a display interface 123 which in the preferred embodiment is coupled to an external display device 125. The external display device 125 may for example be a suitable video monitor or TV and the display interface 123 performs the necessary functions for interfacing to the specific display device 125.

The video recording apparatus 100 further comprises an input signal detector 127 coupled to the second input 105 of the selection unit 101. The input signal detector 127 is operable to detect if a digital input signal is present on the second input 105. In the preferred embodiment, the input signal detector 127 simply comprises a voltage detector ,which determines whether an appropriate pin on the input connector 111 has a voltage above a given threshold. If the voltage is above the threshold this is an indication that a signal is present on the second input 105. If the voltage is below the threshold, this is an indication that no signal is present on the second input 105. It will be apparent that other means of detecting whether an input signal is present on the second input may be used without detracting from the invention, such as for example a simple mechanical detection of whether a plug is inserted in the input connector 111.

The input signal detector 127 is coupled to a first controller 129 and a second controller 131. The first controller 129 is operable to control the operation of the video recording apparatus 100 in a first operating mode and the second controller 131 is operable to control the operation of the video recording apparatus 100 in a second operating mode. Both the first and second controller 129, 131 are coupled to the selection unit 101, the video processor 115, the presentation processor 119 and the user interface controller 121 and are operable to control the operation of these. Accordingly the operation of the video recording apparatus 100 is different depending on which controller 129, 131 is controlling the video recording apparatus 100. The first and second controllers 129, 131 are furthermore coupled to a user input 133 from which inputs can be received from a user, for example in response to activations of a remote control. The first and second controllers 129, 131 are operable to modify the operation of the video recording apparatus 100 in response to these user inputs and are specifically operable to decode user inputs associated with the on-screen displays.

It will be appreciated that the first and second controller 129, 131 for clarity and brevity are described as separate functional modules but that these may be integrated and for example implemented as different programmes in the same processor or as a single programme having different associated subroutines, parameters, variables and/or characteristics dependent on whether an input signal is detected on the second input.

The first and second controller 129, 131 are coupled to the input signal detector 127. If the input signal detector 127 determines that no signal is present on the second input 105, it will generate a control signal activating the first controller 129 and de-activating the second controller 131. If the input signal detector 127 determines that a signal is present on the second in put 105, it will generate a control signal activating the second controller 131 and de-activating the first controller 129. Thus the operation of the video recording apparatus 100 will be controlled by the first controller 129 if no input signal is present on the second input 105 and by the second controller 131 if an input signal is present. This allows for the operation of the video recording apparatus 100 to be independently optimised for the situation where an input signal is present and for the situation when no input signal is present. Hence, the operation of the video recording apparatus 100 automatically modifies the operation of the video recording apparatus 100 to be suited for the input signal being received.

It will be appreciated that any suitable operational configuration and functionality for the first and second operating modes may be used. Specifically, the first and second operating modes may comprise different video recording functionality. For example, in the second mode wherein the signal is a digital video signal, different data rates may possibly be selected by a user thereby allowing the user to trade off storage requirements for video quality. Such a feature may not be available in the first operating mode.

In some embodiments, the video recording apparatus 100 comprises editing functionality which is different in the first and second operating mode. For example, video editing is typically much simpler and less resource demanding to perform for a digital input signal than for an analogue signal. Thus, in the first operating mode, only simple or no editing functions are feasible and accordingly the video recording apparatus 100 offers only few or no editing functions to the user. Instead, this resource may be allocated for other purposes. In the second operating mode, video editing is feasible and accordingly a suitable range of video editing functions are offered to the user.

Furthermore, digital video signals comprise additional information in comparison to an analogue video signal. For example, the video signal may comprise time information indicating the date and time of recording by the source. This information is preferably used to provide additional functions that cannot be provided for analogue signals. For example, the video recorder may automatically arrange and present the stored video clips in chronological order.

A video recording apparatus 100 has a number of limitations imposed by the hardware used. For example, the computational resource is typically limited by the built-in processing resource and memory resource. The impact of these limitations on the functionality is different depending on the type of input signal being selected. Therefore, in the preferred embodiment, the functionality provided in each embodiment is independently optimised to suit the characteristics of that signal type for the given hardware limitations.

In the preferred embodiment, the second operating mode is a video archiving mode. In most current digital video recorders, the digital input is typically used for archiving video from an external source, such as a digital DV camera. Hence, a user will typically use the second input for a specific archiving application, and accordingly the second controller 131 is specifically operable to provide exactly the functionality required for this operation. Thus, when the video recording apparatus 100 detects that an external source, such as a DV camera, is feeding a signal to the second input 105, it automatically switches to provide the functionality required for archiving. This provides a very simple and user friendly operation.

In some embodiments, the different functionality comprises different input selection functionality. Preferably, the selection functionality is such that when in the first operating mode, only input signals associated with the first input 103 can be selected, and when in the second mode only input signals associated with the second signal can be selected. This not only provides a user friendly operation but also separates the first and second input 103, 105 functionally, thus reducing delays and degraded performance associated with switching from one type of input to another.

Conventional digital video recorders typically implement a selection carousel or selection ring. For example, a video recorder may in response to user activations cycle through TV channel 1, TV channel 2, TV channel 3, Analogue aux 1, Analogue aux 2, Digital aux 1, Digital aux 2 before returning to TV channel 1 and repeating the cycle. However, increasing numbers of possible input signals increase the cycle through time, which is inconvenient as the selection operation is one of the most frequent operations. Furthermore a number of disadvantages are often associated with switching from a digital input to an analogue input or vice versa. For example, the switching to a digital signal typically incurs an increased delay due to the input circuitry attempting to synchronise to a possible incoming data stream. Also, switching from a digital input to an analogue input may often result in screen artefacts such as freezing or blinking.

In accordance with an embodiment of the invention, the selection ring automatically skips the entries associated with the second input when in the first operating mode. Thus in the specific example, a selection ring of TV channel 1, TV channel 2, TV channel 3, Analogue aux 1, Analogue aux 2 followed by TV channel 1 would be implemented by the first controller 129 in the first mode. In the second mode, the selection ring will only comprise the digital inputs Digital aux 1 and Digital aux 2. Hence, the embodiment automatically changes between two reduced selection rings and avoids the disadvantages associated with switching between digital and analogue inputs. In some embodiments, the second selection ring may simply comprise the second input 105.

Thus the video recording apparatus 100 has a method of operation wherein it operates in a first operating mode when no input signal is detected on the second input; and in the second operating mode with a different functionality when an input signal is detected on the second input.

The invention can be implemented in any suitable form including hardware, software, firmware or any combination of these. However, preferably, the invention is implemented as software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is no feasible and/or advantageous. In addition, singular references do not exclude a plurality. Thus references to "a", "an", "first", "second" etc do not preclude a plurality.

In summary, The invention relates to a video recording apparatus (100) comprising a selection unit (101) for selecting between a first input (103) for receiving a first input signal and a second input (105) for receiving a second input signal of a different type. The first input signal is typically an analogue signal and the second input signal is a digital DV signal. The video recording apparatus (100) further comprises a first controller (129) for operating the video recording apparatus (100) in a first operating mode and a second controller (131) for operating in a second operating mode having different functionality. An input signal detector (127) detects if a signal is present on the second input and if so activates the second controller (131). Otherwise the first controller (129) is activated. Hence, the video recording apparatus (100) operates in different operating modes dependent on whether an input signal is detected on the second input (105).

## Claims

1. A video recording apparatus (100) comprising:
a first input (103) for receiving at least a first input signal of a first type;
a second input (105) for receiving at least a second input signal of a second type different from the first type; H
control means (129) for operating in a first operating mode when no input signal is detected on the second input (105); and
control means (131) for operating in a second operating mode having different functionality with respect to the first operating mode when an input signal is detected on the second input,
**characterized in that** the video recording apparatus (100) further comprises:
means for selecting (101), which are configured to generate an on-screen display including a selection ring for enabling a user to select an input entry associated with the first input (103) or the second input (105), the means for selecting (101) being operable to enable only selection of an input entry associated with the first input (103) and to skip the input entries associated with the second input (105) when in the first operating mode.

2. A video recording apparatus (100) as claimed in claim 1 wherein the different functionality comprises different video recording functionality.

3. A video recording apparatus (100) as claimed in claim 1 wherein the first and second operating modes have different video editing functionality.

4. A video recording apparatus (100) as claimed in claim 1 wherein the second operating mode is a video archiving mode.

5. A video recording apparatus (100) as claimed in claim 1 wherein the apparatus has hardware limitations that cause a first functionality limitation on signals of the first type and a second functionality limitation on signals of the second type and the functionality of the first operating mode meets that of the first functionality limitation and the functionality of the second operating mode meets that of the second functionality limitation.

6. A video recording apparatus (100) as claimed in claim 5 wherein the hardware limitation is a computational resource limitation.

7. A video recording apparatus (100) as claimed in claim 1 wherein the second type of input signal comprises additional information not present in the first type of input signal and the second mode comprises functionality using this additional information.

8. A video recording apparatus (100) as claimed in claim 1 wherein the different functionality comprises different input entry selection functionality.

9. A video recording apparatus (100) as claimed in claim 1 wherein the selection means (101) comprises a selection carousel which in the first operation mode includes only input entries associated with the first input (103).

10. A video recording apparatus (100) as claimed in claim 1 wherein the selection means (101) is operable to only enable selection of entries associated with the second input (105) when in the second mode.

11. A video recording apparatus (100) as claimed in claim 1 wherein the first type of input signal is an analogue type of input signal and the second type of input signal is a digital type of input signal.

12. A video recording apparatus (100) as claimed in claim 11 wherein the second type of signal is a digital video (DV) signal.

13. A method of operation for a video recording apparatus (100) having a first input (103) for receiving at least a first input signal of a first type and a second input (105) for receiving at least a second input signal of a second type different than the first type; the method comprising the steps of:
operating in a first operating mode when no input signal is detected on the second input; and
operating in a second operating mode having different functionality than the first operating mode when an input signal is detected on the second input,
**characterized in that** the method further comprises a step of: generating an on-screen display including a selection ring
enabling selection by a user of an input entry associated with the first input (103) or the second input (105), the step of enabling selection being operable to enable only selection of an input entry associated with the first input (103) and to skip the input entries associated with the second input (105) when in the first operating mode.

14. A computer program enabling the carrying out f the steps of a method according to claim 13.

15. A record carrier comprising a computer program as claimed in claim 14.

## Patentansprüche

1. Videoaufzeichnungsgerät (100), das Folgendes umfasst:
einen ersten Eingang (103) zum Empfangen wenigstens eines ersten Eingangssignals eines ersten Typs;
einen zweiten Eingang (105) zum Empfangen wenigstens eines zweiten Eingangssignals eines von dem ersten Typ abweichenden zweiten Typs;
Steuermittel (129) zum Betrieb in einer ersten Betriebsart, wenn an dem zweiten Eingang (105) kein Eingangssignal detektiert wird; und
Steuermittel (131) zum Betrieb in einer zweiten Betriebsart mit einer gegenüber der ersten Betriebsart anderen Funktionalität, wenn an dem zweiten Eingang ein Eingangssignal detektiert wird,
**dadurch gekennzeichnet, dass** das Videoaufzeichnungsgerät (100) weiterhin Folgendes umfasst:
Mittel zum Selektieren (101), die zum Erzeugen einer Bildschirmanzeige mit einem Selektionsring vorgesehen sind, damit einem Benutzer die Möglichkeit geboten wird, eine mit dem ersten Eingang (103) oder dem zweiten Eingang (105) assoziierte Eingangseingabe zu selektieren, wobei die Mittel zum Selektieren (101) wirksam sind nur eine Selektion einer mit dem ersten Eingang (103) assoziierten Eingangseingabe zu ermöglichen und die mit dem zweiten Eingang (105) assoziierten Eingangseingaben zu überspringen, wenn in der ersten Betriebsart tätig.

2. Videoaufzeichnungsgerät (100) nach Anspruch 1, wobei die andere Funktionalität eine andere Videoaufzeichnungsfunktionalität umfasst.

3. Videoaufzeichnungsgerät (100) nach Anspruch 1, wobei die erste und die zweite Betriebsart je eine andere Videoaufbereitungsfunktionalität haben.

4. Videoaufzeichnungsgerät (100) nach Anspruch 1, wobei die zweite Betriebsart eine Videoarchivierungsform ist.

5. Videoaufzeichnungsgerät (100) nach Anspruch 1, wobei das Gerät Hardwarebeschränkungen aufweist, die für Signale des ersten Typs eine erste Funktionalitätsbeschränkung, und für Signale des zweiten Typs eine zweite Funktionalitätsbeschränkung verursachen und wobei die Funktionalität der ersten Betriebsart der der ersten Funktionalitätsbeschränkung entspricht und wobei die Funktionalität der zweiten Betriebsart der der zweiten Funktionalitätsbeschränkung entspricht.

6. Videoaufzeichnungsgerät (100) nach Anspruch 5, wobei die Hardwarebeschränkung eine rechnerbetonte Ressourcebeschränkung ist.

7. Videoaufzeichnungsgerät (100) nach Anspruch 1, wobei das Eingangssignal zweiten Typs zusätzliche Information enthält, die in dem Eingangssignal ersten Typs nicht vorhanden ist und wobei die zweite Betriebsart diese zusätzliche Information verwendende Funktionalität aufweist.

8. Videoaufzeichnungsgerät (100) nach Anspruch 1, wobei die andere Funktionalität eine andere Eingangseingabenselektionsfunktionalität aufweist.

9. Videoaufzeichnungsgerät (100) nach Anspruch 1, wobei das Selektionsmittel (101) ein Selektionskarussell aufweist, das in der ersten Betriebsart nur mit dem ersten Eingang (103) assoziierte Eingangseingaben umfasst.

10. Videoaufzeichnungsgerät (100) nach Anspruch 1, wobei das Selektionsmittel (101) derart betrieben werden kann, wenn in der zweiten Betriebsart, dass es nur eine Selektion von Eingaben ermöglicht, die mit dem zweiten Eingang (105) assoziiert sind.

11. Videoaufzeichnungsgerät (100) nach Anspruch 1, wobei das Eingangssignal ersten Typs ein Eingangssignal analogen Typs ist und das Eingangssignal zweiten Typs ein Eingangssignal digitalen Typs ist.

12. Videoaufzeichnungsgerät (100) nach Anspruch 11, wobei das Signal zweiten Typs ein digitales Videosignal (DV) ist.

13. Verfahren zum Betreiben eines Videoaufzeichnungsgeräts (100) mit einem ersten Eingang (103) zum Empfangen wenigstens eines ersten Eingangssignals eines ersten Typs und mit einem zweiten Eingang (105) zum Empfangen wenigstens eines zweiten Eingangssignals eines von dem ersten Typ abweichenden zweiten Typs; wobei das Verfahren die nachfolgenden Verfahrensschritte umfasst:
das Funktionieren in einer ersten Betriebsart, wenn an dem zweiten Eingang kein Eingangssignal detektiert wird; und
das Funktionieren in einer zweiten Betriebsart mit einer gegenüber der ersten Betriebsart anderen Funktionalität, wenn an dem zweiten Eingang ein Eingangssignal detektiert wird,
**dadurch gekennzeichnet, dass** das Verfahren weiterhin die nachfolgenden Verfahrensschritte umfasst:
das Erzeugen einer Bildschirmanzeige mit einem Selektionsring;
das Ermöglichen einer Selektion einer mit dem ersten Eingang (103) oder dem zweiten Eingang (105) assoziierten Eingangseingabe durch einen Benutzer, wobei der Schritt zum Ermöglichen einer Selektion derart funktioniert, dass nur eine Selektion einer mit dem ersten Eingang (103) assoziierten Eingangseingabe ermöglicht wird, und die mit dem zweiten Eingang (105) assoziierten Eingangseingaben übersprungen werden, wenn in der ersten Betriebsart tätig.

14. Computerprogramm, das die Durchführung der Verfahrensschritte eines Verfahrens nach Anspruch 13 umfasst.

15. Aufzeichnungsträger mit einem Computerprogramm nach Anspruch 14.

## Revendications

1. Appareil d'enregistrement vidéo (100) comprenant :
une première entrée (103) pour recevoir au moins un premier signal d'entrée d'un premier type ;
une seconde entrée (105) pour recevoir au moins un second signal d'entrée d'un second type qui est différent du premier type ;
des moyens de commande (129) pour fonctionner dans un premier mode de fonctionnement lorsque pas de signal d'entrée n'est détecté sur la seconde entrée (105) ; et
des moyens de commande (131) pour fonctionner dans un second mode de fonctionnement ayant une fonctionnalité différente par rapport au premier mode de fonctionnement lorsqu'un signal d'entrée est détecté sur la seconde entrée ;
**caractérisé en ce que** l'appareil d'enregistrement vidéo (100) comprend en outre :
des moyens de sélection (101) qui sont configurés de manière à générer un affichage sur écran comprenant un anneau de sélection pour permettre à un utilisateur de sélectionner une introduction d'entrée qui est connexe à la première entrée (103) ou à la seconde entrée (105), les moyens de sélection (101) étant susceptibles d'exploitation pour permettre seulement une sélection d'une introduction d'entrée qui est connexe à la première entrée (103) et pour sauter les introductions d'entrée qui sont connexes à la seconde entrée (105) en cas de présence dans le premier mode de fonctionnement.

2. Appareil d'enregistrement vidéo (100) selon la revendication 1, dans lequel la fonctionnalité différente comprend une fonctionnalité d'enregistrement vidéo différente.

3. Appareil d'enregistrement vidéo (100) selon la revendication 1, dans lequel les premier et second modes de fonctionnement présentent une fonctionnalité d'édition vidéo différente.

4. Appareil d'enregistrement vidéo (100) selon la revendication 1, dans lequel le second mode de fonctionnement est un mode d'archivage vidéo.

5. Appareil d'enregistrement vidéo (100) selon la revendication 1, dans lequel l'appareil présente des limitations matérielles qui causent une première limitation de fonctionnalité sur des signaux du premier type et une seconde limitation de fonctionnalité sur des signaux du second type, et la fonctionnalité du premier mode de fonctionnement satisfait à celle de la première limitation de fonctionnalité et la fonctionnalité du second mode de fonctionnement satisfait à celle de la seconde limitation de fonctionnalité.

6. Appareil d'enregistrement vidéo (100) selon la revendication 5, dans lequel la limitation matérielle est une limitation de ressource de calcul.

7. Appareil d'enregistrement vidéo (100) selon la revendication 1, dans lequel le second type de signal d'entrée comprend de l'information additionnelle qui n'est pas présente dans le premier type de signal d'entrée et dans lequel le second mode comprend une fonctionnalité en utilisant cette information additionnelle.

8. Appareil d'enregistrement vidéo (100) selon la revendication 1, dans lequel la fonctionnalité différente comprend une fonctionnalité de sélection d'introduction d'entrée différente.

9. Appareil d'enregistrement vidéo (100) selon la revendication 1, dans lequel les moyens de sélection (101) comprennent un carrousel de sélection qui, dans le premier mode de fonctionnement, comprend seulement des introductions d'entrée qui sont connexes à la première entrée (103).

10. Appareil d'enregistrement vidéo (100) selon la revendication 1, dans lequel les moyens de sélection (101) sont susceptibles d'exploitation pour permettre seulement la sélection d'introductions qui sont connexes à la seconde entrée (105) lorsqu'ils se trouvent dans le second mode.

11. Appareil d'enregistrement vidéo (100) selon la revendication 1, dans lequel le premier type de signal d'entrée est un type analogique de signal d'entrée et dans lequel le second type de signal d'entrée est un type numérique de signal d'entrée.

12. Appareil d'enregistrement vidéo (100) selon la revendication 11, dans lequel le second type de signal est un signal vidéo numérique (DV).

13. Procédé de fonctionnement d'un appareil d'enregistrement vidéo (100) ayant une première entrée (103) pour recevoir au moins un premier signal d'entrée d'un premier type et une seconde entrée (105) pour recevoir au moins un second signal d'entrée d'un second type qui est différent du premier type ; le procédé comprenant les étapes suivantes consistant à :
fonctionner dans un premier mode de fonctionnement lorsque pas de signal d'entrée n'est détecté sur la seconde entrée ; et
fonctionner dans un second mode de fonctionnement ayant une fonctionnalité différente par rapport au premier mode de fonctionnement lorsqu'un signal d'entrée est détecté sur la seconde entrée ;
**caractérisé en ce que** le procédé comprend en outre l'étape suivante consistant à :
générer un affichage sur écran comprenant un anneau de sélection pour permettre à un utilisateur de sélectionner une introduction d'entrée qui est connexe à la première entrée (103) ou à la seconde entrée (105), l'étape consistant à permettre la sélection étant susceptible d'exploitation pour permettre seulement la sélection d'une introduction d'entrée qui est connexe à la première entrée (103) et pour sauter les introductions d'entrée qui sont connexes à la seconde entrée (105) en cas de présence dans le premier mode de fonctionnement.

14. Programme informatique permettant la mise en oeuvre des étapes d'un procédé selon la revendication 13.

15. Support d'enregistrement comprenant un programme informatique selon la revendication 14.
